# EUROPEAN PATENT APPLICATION

(11) **EP 1 167 124 A2**
(43) Date of publication of application: **02.01.2002**
(21) Application number: 01112659.6
(22) Date of filing: 25.05.2001
(51) Int. Cl.: B60R 13/02, F16B 5/06, F16B 5/12

(54) **Locking clip made of plastic material**

(30) Priority: 22.06.2000 IT TO000107 U
(71) Applicant: FIAT AUTO S.p.A., 10135 Torino (IT)
(72) Inventor: Baiano, Antonio, 10100 Torino (IT)
(74) Representative: Di Francesco, Gianni

(57) **Abstract**

Locking clip used to snap lock finishing parts of the bodywork of a motor-vehicles, consisting of a strip (10) preferably made of plastic, folded as to form a V the ends of which are provided with tongues (14, 16) which are perpendicular to said ends, the section of one of them being basically L-shaped.

## Description

### DESCRIPTION

The present invention refers to a locking clip made of plastic material and of the type used on motor-vehicles in order to snap lock finishing parts of the internal bodywork.

It is quite frequent that this type of clip is not perfectly symmetrical so that it is necessary to mount it according with a defined direction and problems can arise for operator in charge. Besides, these clips present a superficial part with no protuberances on it so that it is more difficult to handle them.

It is an object of the present invention to make it easy to catch, handle and press the clip with the hands before it is inserted.

It is a further object of the present invention to make it easier to use this kind of clips by inserting a mark indicating the direction in which they have to be mounted.

These and further advantages of the invention will become clear from the following description referring to the appended drawings provided as non-restrictive example and in which:
figure 1 is a front view of the clip according to the invention;
figure 2 is a perspective view of the clip in figure 1, and
figures from 3 to 5 illustrate the sequence of the operations required for the mounting of the clip of figure 1 in a hole made on the support.

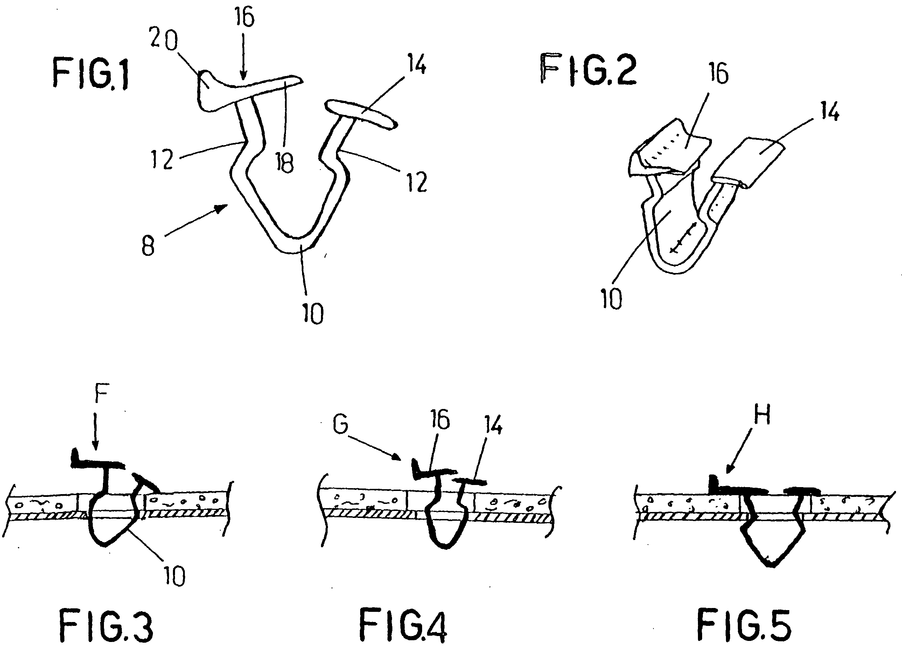

With reference to the figures, and in particular to figures 1 and 2, reference number 8 indicates a clip consisting of a strip 10, preferably made of plastic material, the clip presenting reduced width and being folded as to form a V. At the sides of said V there are recesses 12 which allow to better fit the clip in its seat and especially to keep it in its position once it has been placed there. The ends of the V are provided with two tongues 14 to lock the component to be mounted on the base where the clip 10 is secured. The plant and the section of the first tongue 14 are basically rectangular in shape, the tongue being connected by one of its faces to the end of one of the sides of the strip 10 which is folded in order to form a V. The second tongue 16 consists of two half-parts 18 and 20, their plant being rectangular in shape, the two half-parts being jointed between them in order to form an L.

Similarly to the first tongue, the tongue 16 is connected to the end of the other side of the V-shaped strip by means of one of its half-parts 18, so that the other half-part 20 is directed upwards and towards the far part of the first tongue 14. The half-part 20 is also folded outwards in order to guarantee a grip.

Figures from 3 to 5 show a mounting sequence for the clip. The clip is bent and inserted into the hole: it is to be hold by its tongue 16 and pushed, as indicated by the arrow F, in a direction which is basically perpendicular to the plane in which the hole is. Being still hold by its tongue 16, the clip is then pushed laterally in the direction indicated by the arrow G, so that it takes a vertical position before being further pushed into a definitive vertical position, according to the arrow H, intended to insert the clip completely and lock the finishing element. The operations described above, starting from the right positioning, are facilitated by the presence of the part 20 which is perpendicular to the part 18 of the tongue 16 thanks to which the L-shaped section is possible to be achieved.

## Claims

1. Locking clip of the type used on motor-vehicles in order to snap lock finishing parts of the bodywork, consisting of a strip (10) preferably made of plastic, folded as to form a V the ends of which V are provided with tongues (14, 16) which are basically perpendicular to said ends, **characterised in that** said tongues present a plant which is basically rectangular in shape, the section of one of them being basically L-shaped.

2. Clip as claimed in claim 1, **characterised in that** the tongue, the section of which is basically L-shaped, consists of two half-part (18, 20) of basically rectangular plant, the two half-parts being perpendicularly jointed between them along one of their edges.
